# EUROPÄISCHE PATENTANMELDUNG

(11) **EP 4 277 062 A1**
(43) Veröffentlichungstag der Anmeldung: **15.11.2023**
(21) Anmeldenummer: 22172918.9
(22) Anmeldetag: 12.05.2022
(51) Int. Cl.: H02G 3/06, H02G 3/08, H02G 3/12

(54) **HOHLWANDDOSE MIT VEREINFACHTER KABELSCHUTZROHRFIXIERUNG**

(71) Anmelder: HSB Weibel AG, 9435 Heerbrugg SG (CH)
(72) Erfinder: WEIBEL, Marc, 9435 Heerbrugg (CH); STEIGER, Thomas, 9435 Heerbrugg (CH)
(74) Vertreter: Kaminski Harmann

(57) **Zusammenfassung**

Die Erfindung betrifft eine Hohlwanddose 1 für gebäudetechnische Installationen, insbesondere elektrische Installationsgeräte, mit einem durch einen Bodenbereich 2, eine umlaufende Wand 3 und eine dem Bodenbereich 2 gegenüberliegende Montageöffnung 4 gebildeten Dosenkörper 5 aus Kunststoff. Die Hohlwanddose 1 weist zudem einen in radialer Richtung nach außen vorspringenden Stützflansch 6, Mittel 7, 24, 25, 26 zum Befestigen der Hohlwanddose 1 in einem Dosenloch und mindestens eine im Bodenbereich 2 angeordnete Kabeleinführung 8, 40, 41, 42 auf, wobei durch die mindestens eine Kabeleinführung 8, 40, 41, 42 ein gerilltes Kabelschutzrohr 9 von aussen in den Dosenkörper 5 einführbar ist. Im Bodenbereich 2 der Hohlwanddose 1 ist mindestens ein Kippelement 10, 34, 35, 36 angebracht, wobei das mindestens eine Kippelement 10, 34, 35, 36 einen Einrastsektor 11, 37, 38, 39, insbesondere in Form mindestens eines Zahns, aufweist, wobei der Einrastsektor 11, 37, 38, 39 derart ausgestaltet ist, dass dieser bei einer durch mechanisches Betätigen ausgelösten Bewegung des mindestens einen Kippelements 10, 34, 35, 36, in eine Rille des durch die mindestens eine Kabeleinführung 8, 40, 41, 42 in den Dosenkörper 5 eingeführten Kabelschutzrohrs 9 einrastbar ist und so das Kabelschutzrohr 9 im Dosenkörper 5 hinsichtlich einer Translationsbewegung senkrecht zur Kabeleinführung 8, 40, 41, 42 fixiert.

## Beschreibung

### GEBIET DER ERFINDUNG

Die Erfindung betrifft eine Hohlwanddose für gebäudetechnische Installationen, wobei im Bodenbereich dieser Hohlwanddose mindestens ein Kippelement angebracht ist. Das mindestens eine Kippelement weist einen Einrastsektor, insbesondere in Form mindestens eines Zahns, auf. Der Einrastsektor ist derart ausgestaltet, dass dieser bei einer durch mechanisches Betätigen ausgelösten Bewegung des mindestens einen Kippelements, in eine Rille des durch die mindestens eine Kabeleinführung in den Dosenkörper eingeführten Kabelschutzrohrs einrastbar ist und so das Kabelschutzrohr im Dosenkörper hinsichtlich einer Translationsbewegung senkrecht zur Kabeleinführung fixiert.

### HINTERGRUND DER ERFINDUNG

Für den Einbau von Elektroinstallationen in Wände, wärmegedämmte Wandungen oder Fassaden von Gebäuden ist es üblich, hinter der entsprechenden Wandung elektrische Kabel zuzuführen, die in bestimmten Bereichen aus der Wand herausgeführt werden. In diesen Bereichen werden Wand- oder auch Gerätedosen angeordnet, um beispielsweise Schalter, Steckdosen oder ähnliche Installationselemente anzubringen. Liegt jedoch eine Wand mit einem Hohlraum dahinter vor, wobei diese Wand als Hohlwand bezeichnet wird, so sind spezielle Hohlwanddosen nötig, um eine Fixierung der Installationselemente in der Hohlwand zu ermöglichen.

Mögliche Anwendungsgebiete für Hohlwanddosen sind der Leicht- und Ständerbau. Beispielsweise wird vor einer Gebäudewand mit Abstand eine ein oder mehrschichtige Hohlwand aus Holzplatten oder einer Kombination von Gipskartonplatten und Holzplatten angebracht. Um in eine solche Wandung eine Hohlwanddose einzubringen, wird mit einem geeigneten Werkzeug ein Dosenloch in die Hohlwand eingebracht. In ein solches Dosenloch wird eine Hohlwanddose eingesetzt, die dann rückseitig mit verlegten elektrischen Kabeln verbunden werden kann.

Derartige Hohlwanddosen verfügen über einen Dosenkörper, der durch einen Boden, eine umlaufende Wand und eine dem Boden gegenüberliegende Montageöffnung gebildet ist. An den Dosenkörper ist an seinem die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Der Stützflansch weist Befestigungsbohrungen auf, durch welche die Hohlwanddose mit der Wand verschraubt werden kann. Bei gängigen Hohlwanddosen liegen die Befestigungsbohrungen/Befestigungsstellen an vier kreuzweise diagonal gegenüberliegenden Stellen vor.

Die in die Hohlwanddosen eingesetzten Elektroinstallationen werden nach dem Stand der Technik durch hierfür vorgesehene Löcher/Bohrungen oder durch die Befestigungsbohrungen im Stützflansch direkt in die Wand geschraubt. Hierfür ist jedoch ein vergrösserter Stützflansch nötig, welcher die Löcher für das Anschrauben der Elektroinstallationen bereitstellt. Der vergrösserte Stützflansch führt zu einer Begrenzung des Durchmessers der Montageöffnung, da die Gesamtausdehnung der Hohlwanddose (Montageöffnung plus Stützflansch) hinter einer Aussenabdeckung verborgen bleiben sollen.

Elektroinstallation werden folglich entweder auch direkt über die in die Hohlwand greifenden Schrauben befestigt (mit welchen auch die Dose befestigt ist) oder über Löcher in der Dosenwand (Elektroinstallation wird an Dosenkörper geschraubt). Jedenfalls kann dann die Elektroinstallation lediglich in genau einer vorgegebenen Ausrichtung montiert werden, die durch die Einbauausrichtung der Hohlwanddose in der Wand schon fix vorgegeben ist.

Für solche Hohlwanddosen sind zudem Befestigungsmittel zum Befestigen der Dose im Dosenloch bekannt. Bei den Befestigungsmitteln kann es sich beispielsweise um in radialer Richtung ausstellbare Klemmkörper handeln, von denen jeder auf dem Gewindeschaft einer Stellschraube sitzt. Die Stellschraube ist in einem in den Dosenkörper integrierten, durch einen Schraubenkanalmantel eingefassten Schraubenkanal geführt. Zum Einschieben der Hohlwanddose in ein Dosenloch befindet sich jeder Klemmkörper in einer in die Außenwand des Dosenkörpers eingebrachten Klemmkörperaufnahme. Ist die Hohlwanddose mit ihrem Dosenkörper in ein Dosenloch eingesetzt, werden die Klemmkörper zum Hintergreifen der das Dosenloch einfassenden Wandabschnitte ausgeschwenkt. Durch Spannen der Stellschrauben wird die Hohlwanddose an diesem Wandabschnitt verklemmt, die sich sodann zwischen dem Stützflansch und den ausgeschwenkten Klemmkörpern befindet.

Sofern es nach der Erstinstallation erforderlich ist, die befestigte Hohlwanddose nochmals zu entfernen, um bestimmte Manipulationen vornehmen zu können, so dreht der Monteur die entsprechenden Stellschrauben in gegensinniger Richtung, so dass die Befestigungsmittel sich wieder zur Klemmkörperaufnahme hinbewegen. Um die Dose aus dem Dosenloch entfernen zu können, ist es aber nicht nur erforderlich, die Befestigungsmittel in die Vormontageposition zurück zu verschieben. Sie müssen auch einschwenken, um nicht über die Dosenwand hervorzuragen und innerhalb der Fluchtlinie der Dosenwand zu liegen, damit die Dose aus dem Dosenloch entfernt werden kann.

In Einbausituationen, bei denen mehrere Hohlwanddosen nebeneinander (zum Beispiel zur Installation mehrerer Steckdosen oder Schalter in einer vertikalen oder horizontalen Reihe) oder grossflächige Hohlwanddosen (zum Beispiel zur Installation eines grösseren Installationselements wie einem Display) erforderlich sind, besteht durch Verbinden der einzelnen Hohlwanddosen die Möglichkeit den Einbau zu vereinfachen. Die Hohlwanddosen können vor dem Einbau verbunden werden und haben somit eine feste Position zueinander. Diese Position verändert sich auch während des Einführens in das entsprechend angepasste und vergrösserte Dosenloch und dem Befestigen durch die Befestigungsmittel nicht.

Für das Verbinden der einzelnen Hohlwanddosen lassen sich Teile der Dosenwand, insbesondere gegenüberliegende Teile, derart entfernen, dass Öffnungen in der Dosenwand vorliegen. Diese Öffnungen sind von zwei voneinander beabstandeten Seitenrändern begrenzt, die von der Montageöffnung des Dosenkörpers bis nahe dessen Dosenkörperbodens verlaufen und an diesen Seitenrändern Steckverbindungen aufweisen. Durch diese Steckverbindungen lassen sich die Hohlwanddosen miteinander verbinden, so dass die Öffnungen übereinanderliegen und so einen Zugang zwischen den Hohlwanddosen bilden. Durch diesen Zugang können elektrische Kabel oder weitere Installationselemente geführt werden.

Hohlwanddosen nach dem Stand der Technik weisen zudem verschieden große Leitungseinlässe/Kabeleinführungen für das Hindurchführen verschieden dicker elektrischer Leitungen bzw. Kabelschutzrohre auf, welche in der Regel am Boden des Dosenkörpers angeordnet sind. Die verschiedenen Durchmesser dieser Kabeleinführungen sind an gängige Durchmesser von elektrischen Leitungen oder Kabelschutzrohre angepasst und zwar so, dass die eingeführten elektrischen Leitungen oder Kabelschutzrohre möglichst bündig mit dem Rand der entsprechenden Kabeleinführung abschliessen. Weiterhin verfügt eine solche Kabeleinführung in der Regel über eine Abdeckung, die mit dem Rand der Kabeleinführung über einen verjüngten Bereich oder einer anderen Form einer Sollbruchstelle verbunden ist. So kann die Abdeckung durch Drücken herausgebrochen oder mit einem Messer herausgeschnitten werden, wodurch die Kabeleinführung für die Montage freilegbar ist.

Um Hohlwanddosen für die flexible Einführung von elektrischen Leitungen oder Kabelschutzrohren unterschiedlichen Durchmessers bereitzustellen, ist es üblich Kabeleinführungen mit genormten aber möglichst grossen Durchmessern einzubauen und in diese eine Abdeckung einzubringen. Diese Abdeckung verfügt über eine Aussparung mit einem kleineren Durchmesser als die Abdeckung selber. In dieser Aussparung ist ebenfalls eine Abdeckung eingebracht, welche mit dem Rand der Aussparung über einen verjüngten Bereich oder einer anderen Form einer Sollbruchstelle verbunden ist. Auf diese Weise kann für den Fall des Einführens einer elektrischen Leitung oder eines Kabelschutzrohrs mit einem Durchmesser ähnlich zur Kabeleinführung beide Abdeckungen entfernt werden. Für das Einführen einer elektrischen Leitung oder eines Kabelschutzrohrs mit einem Durchmesser kleiner als der Durchmesser der Aussparung, kann lediglich die Abdeckung der Aussparung entfernt werden. Die Kabeleinführung und die Aussparung in der Abdeckung der Kabeleinführung sind dabei in der Regel konzentrisch angeordnet, also mit einem gemeinsamen Mittelpunkt.

Hohlwanddosen nach dem zuvor beschriebenen Stand der Technik haben den Nachteil, dass eingeführte elektrische Leitungen oder Kabelschutzrohre, trotz der Möglichkeit den Durchmesser der Einführung zu variieren, bei der Montage wieder heraus- oder zu weit hineinrutschen können. Dieser Umstand erschwert die Montage, da die Hohlwanddose unter Umständen wieder aus dem Dosenloch herausgeholt werden muss und die elektrischen Leitungen oder Kabelschutzrohre neu positioniert werden müssen.

### AUFGABE DER ERFINDUNG

Es ist daher die Aufgabe der Erfindung eine Hohlwanddose bereitzustellen, die eine erleichterte Installation der elektronischen Bauteile in der Hohlwanddose ermöglicht.

Diese Aufgabe wird durch die Realisierung zumindest eines Teils der Merkmale des unabhängigen Patentanspruchs erreicht. Merkmale, die die Erfindung in einer alternativen oder vorteilhaften Weise weiterentwickeln, sind in den abhängigen Patentansprüchen beschrieben.

### ZUSAMMENFASSUNG DER ERFINDUNG

Die Erfindung betrifft eine Hohlwanddose für gebäudetechnische Installationen, insbesondere elektrische Installationsgeräte, mit einem durch einen Bodenbereich, eine umlaufende Wand und eine dem Bodenbereich gegenüberliegende Montageöffnung gebildeten Dosenkörper aus Kunststoff. Die Hohlwanddose weist zudem einen in radialer Richtung nach außen vorspringenden Stützflansch, Mittel zum Befestigen der Hohlwanddose in einem Dosenloch und mindestens eine im Bodenbereich angeordnete Kabeleinführung auf, wobei durch die mindestens eine Kabeleinführung ein gerilltes/geripptes Kabelschutzrohr von aussen in den Dosenkörper einführbar ist.

Besagte Hohlwanddose ist dadurch gekennzeichnet, dass im Bodenbereich mindestens ein Kippelement angebracht ist, wobei das mindestens eine Kippelement einen Einrastsektor, insbesondere in Form mindestens eines Zahns, aufweist. Der Einrastsektor ist derart ausgestaltet, dass dieser bei einer durch mechanisches Betätigen ausgelösten Bewegung des mindestens einen Kippelements, in eine Rille des durch die mindestens eine Kabeleinführung in den Dosenkörper eingeführten Kabelschutzrohrs einrastbar ist und so das Kabelschutzrohr im Dosenkörper hinsichtlich einer Translationsbewegung senkrecht zur Kabeleinführung fixiert.

Der derzeitige Trend geht hin zum Einbau immer mehr bzw. immer grösser werdender Elektroinstallationen/Elektronikbauteile in die Gebäudewände. Aus diesem Grund wird eine Ausweitung des Durchmessers/Volumens der Hohlwanddose angestrebt, um die immer grösser werdenden Elektronikbauteile fassen zu können. Jedoch soll hierbei eine bestimmte Grösse der Aussenabdeckungen der Elektronikbauteile nicht überschritten werden, was auch die Ausdehnung der hinter den Aussenabdeckungen liegenden Hohlwanddosen begrenzt. Besonders vorteilhaft gestaltete Hohlwanddosen weisen folglich einen Dosenkörper auf, dessen Durchmesser maximal gross ist, jedoch hinter der Aussenabdeckung verborgen bleibt. Diese Hohlwanddosen weisen daher genormte Dosenkörper auf (Norm: EN60670), welche aufgrund dessen einen Durchmesser von 83 mm und eine Tiefe von 65 mm aufweisen. Die Herausforderung bei der Herstellung einer solchen genormten Hohlwanddose liegt folglich darin, die entscheidenden Bauteile zu beinhalten sowie genügend Platz für die Elektroinstallationen bereitzustellen, ohne die durch die Norm vorgegebenen Masse zu über- bzw. zu unterschreiten. Dies wird bei der erfindungsgemässen Hohlwanddose dadurch erreicht, dass die Fläche des Stützflanschs so gewählt wird, dass eine Stützwirkung am Rand des Dosenlochs gewährleistet ist, die Fläche des Stützflanschs aber keinen unnötigen Platz einnimmt und so den Durchmesser des Dosenkörpers verringert. Die erfindungsgemässe Hohlwanddose entspricht dabei ebenfalls der Norm EN60670 und wird beispielsweise aus Kunststoff, insbesondere aus Polypropylen, hergestellt, wobei dieser Kunststoff ein geringes Gewicht sowie eine geringe elektrische Leitfähigkeit aufweist und zudem schwer entzündlich/feuerfest sowie leicht formbar ist.

In einer weiteren Ausführungsform der Erfindung weist das mindestens eine Kippelement weiter ein Scharnier auf, wobei mittels des Scharniers das mindestens eine Kippelement bewegbar am Bodenbereich angebracht ist. Das mindestens eine Kippelement weist zudem einen Formsektor auf, wobei der Formsektor derart ausgestaltet ist, dass der Formsektor das Scharnier und den Einrastsektor miteinander verbindet und eine Fläche für ein mechanisches Betätigen des Kippelements bereitstellt. Das Scharnier ist dabei derart ausgestaltet, dass das mindestens eine Kippelement und somit auch der Einrastsektor stufenweise bewegbar ist, insbesondere wobei das bewegte mindestens eine Kippelement an verschiedenen Stellen des Bewegungsradius des mindestens einen bewegten Kippelements auf einen Zwischen-Widerstand im Scharnier trifft, welcher nur durch weiteres mechanisches Betätigen/drücken des mindestens einen Kippelements überwindbar ist und dadurch zwischen-einrastbar ist. Dies erlaubt eine Fixierung von Kabelschutzrohren unterschiedlicher Durchmesser.

Es ist ebenfalls denkbar, glatte Kabelschutzrohre oder Kabel ohne Rillen/Rippung mittels des Kippelements und des Einrastsektors zu fixieren. Hierfür wird mindestens ein Kippelement (alternative Bezeichnung: Schwenkdeckel) mechanisch betätigt, wodurch sich das Kippelement mittels des Scharniers in das Dosenkörperinnere bewegt. Das Kippelement wird soweit bewegt bis der Einrastsektor auf das glatte Kabelschutzrohr/Kabel drückt und der zuvor beschriebene Zwischen-Widerstand des Scharniers auftritt, wodurch das glatte/ungerippte Kabelschutzrohr/Kabel durch die Kombination aus Druck und Reibungswiderstand im Dosenkörperinneren fixiert wird und somit weder weiter in den Dosenkörper reinrutschen noch aus dem Dosenkörper herausrutschen kann. Der Einrastsektor ist an die Form eines Kabelschutzrohrs/Kabel angepasst und ermöglicht so eine möglichst feste Fixierung, da die Reibungsfläche maximiert ist.

In einer weiteren Ausführungsform ist das mindestens eine Kippelement zurück in seine Ausgangsposition bewegbar.

In einer weiteren Ausführungsform weist die Hohlwanddose weiterhin mindestens eine am Bodenbereich angeordnete Kunststofferhebung auf. Die mindestens eine Kunststofferhebung ist derart am Bodenbereich angeordnet, dass der Anfang des Kabelschutzrohrs bis zu der mindestens einen Kunststofferhebung einführbar ist und das bis zu der mindestens einen Kunststofferhebung eingeführte Kabelschutzrohr derart im Inneren des Dosenkörpers vorliegt, dass der Einrastsektor bei einer durch mechanisches Betätigen ausgelösten Bewegung des mindestens einen Kippelements, ohne Nachjustieren des Kabelschutzrohrs in eine Rille einrastbar ist. Bei Bedarf kann die mindestens eine Kunststofferhebung herausgeschnitten bzw. herausgebrochen werden, um so das Volumen des Dosenkörperinneren zu vergrössern oder eine zusätzliche Öffnung im Dosenkörperboden bereitzustellen.

Die Kunststofferhebung dient als Barriere/Stopper für das eingeführte Kabelschutzrohr, welches physisch auf die Kunststofferhebung trifft und nicht weiter in das Dosenkörperinnere geschoben werden kann.

In einer weiteren Ausführungsform der Erfindung weist die Hohlwanddose weiterhin mindestens eine einen Führungsrohrabschnitt bildende Führungskante auf, wobei die mindestens eine Führungskante an der mindestens einen Kabeleinführung angeordnet ist und/oder an der Aussparung des zweiten Elements angeordnet ist, Die mindestens eine Führungskante erhebt sich an der Dosenkörperwand mindestens 1 mm, insbesondere 5 mm bis 10 mm, nach aussen und/oder mindestens 1 mm, insbesondere 5 mm bis 10 mm, in das Dosenkörperinnere. Durch die mindestens eine einen Führungsrohrabschnitt bildende Führungskante ist das Kabelschutzrohr derart einführbar, dass das Kabelschutzrohr ohne Nachjustieren beim Einführvorgang auf die den End-Anschlag bildenden Kunststofferhebung trifft (die Kunststofferhebung berührt) und derart im Inneren des Dosenkörpers vorliegt, dass der Einrastsektor bei einer durch mechanisches Betätigen ausgelösten Bewegung des mindestens einen Kippelements, ohne Nachjustieren des Kabelschutzrohrs in eine Rille einrastbar ist. In anderen Worten wird das Kabelschutzrohr bei einem Einführvorgang durch die mindestens eine einen Führungsrohrabschnitt bildende Führungskante richtungsgeführt - indifferent einer tatsächlichen Einschubrichtung - auf die einen End-Anschlag bildende Kunststofferhebung gelenkt. Es spielt dabei keine Rolle, ob das Kabelschutzrohr gerade (senkrecht zur Kabeleinführung) oder schräg (durch einen gewissen Winkel abweichend von der senkrechten Einführung) eingeführt wird, da das Kabelschutzrohr durch die mindestens eine einen Führungsrohrabschnitt bildende Führungskante beim Einführvorgang in die gewünschte Position geführt wird.

In einer weiteren Ausführungsform weist eine Abdeckung der mindestens einen Kabeleinführung ein erstes Element, dessen Fläche kleiner ist als die Fläche der Abdeckung, und ein zweites Element, dessen Fläche der Fläche der Abdeckung entspricht, auf. Das zweite Element weist eine Aussparung auf, dessen Fläche grösser ist als die Fläche des ersten Elements und das erste Element in der Aussparung anordenbar ist. Die Aussparung ist derart anordenbar, dass der Umfang des zweiten Elements und der Umfang der Aussparung von einem Punkt ausgehen, wobei dieser Punkt auf dem Umfang des zweiten Elements liegt.

Möchte der Monteur ein Kabelschutzrohr mit einem geringeren Durchmesser als die Kabeleinführung, welche beispielsweise einen Durchmesser von 25 mm aufweist, oder direkt ein elektrisches Kabel in die Hohlwanddose einführen, kann er lediglich das erste Element entfernen. Dieses Element ist mit dem Rand der Aussparung über einen verjüngten Bereich, welcher als Sollbruchstelle fungiert, verbunden. Durch das Entfernen des ersten Elements wird eine Kabeleinführung mit einem geringeren Durchmesser gebildet, beispielsweise mit einem Durchmesser von 20 mm. Dieser geringere Durchmesser wird ebenfalls durch eine Norm (Norm: EN60670) vorgegeben.

In einer weiteren Ausführungsform ist das mindestens eine Kippelement, derart bewegbar, dass der Einrastsektor an dem Ausgangspunkt in eine Rille des durch die mindestens eine Kabeleinführung in den Dosenkörper eingeführten Kabelschutzrohrs einrastbar ist.

Die Kabeleinführung und die Aussparung in der Abdeckung der Kabeleinführung sind nicht konzentrisch angeordnet. Die Aussparung ist stattdessen derart angeordnet, dass der Umfang des zweiten Elements und der Umfang der Aussparung von einem Punkt ausgehen, wobei dieser Punkt auf dem Umfang des zweiten Elements liegt. Das hat den Vorteil, dass unabhängig davon, ob lediglich das erste Element oder die gesamte Abdeckung entfernt wird, ein Kabelschutzrohr immer nur so in den Dosenkörper einführbar ist, dass die Endposition des Einrastsektors in eine Rille des Kabelschutzrohrs führt und ohne Nachjustieren direkt einrasten kann.

In einer weiteren Ausführungsform weist die Hohlwanddose weiterhin mindestens zwei an der Aussenseite der Dosenkörperwand diametral angeordnete Mittel zum Befestigen der Hohlwanddose in einem Dosenloch auf. Die mindestens zwei diametral angeordnete Mittel weisen durch je eine Schraube verstellbare sowie ausschwenkbare Haltelaschen auf, die in eingeschwenkter Lage in radialer Richtung hinter dem nach außen vorspringenden Stützflansch verborgen bleiben und in ausgeschwenkter Lage in radialer Richtung über den nach außen vorspringenden Stützflansch hinausragen. Die ausschwenkbaren Haltelaschen weisen dabei jeweils eine Auflagefläche von mindestens 25 mm² auf, wodurch selbst bei einem ausreissenden/ausfranzenden Dosenloch eine Befestigung der Hohlwanddose im Dosenloch gewährleistet ist.

In einer weiteren Ausführungsform weist die Dosenkörperwand, insbesondere an diametral gegenüberliegenden Bereichen, ausbrechbare oder austrennbare Wandteile auf, so dass zur Montageöffnung des Dosenkörpers offene Wandausschnitte gebildet sind. Die Wandteile weisen jeweils eine definierte Schneidkontur auf, die es dem Monteur erlaubt beispielsweise ein Messer an der Schneidkontur anzusetzen und das Wandteil geführt abzutrennen (Position des Schnittes/der Schnittfläche wird durch Schneidkontur vorgegeben). Die Schneidkonturen sind derart positioniert, dass der jeweilige Abstand der Wandausschnitte/Schnittflächen zu einer Mittelachse der Hohlwanddose 30 mm beträgt und der Abstand von zwei diametral gegenüberliegenden Wandausschnitten 60 mm (auch bezeichnet als Achsabstand) beträgt.

Die Ränder der Wandausschnitte sind komplementär zueinander, beispielsweise in Form einer Matrize und einer Patrize ausgebildet, so dass benachbarte Dosenkörper durch ineinandergreifende Patrizen und Matrizen miteinander verbindbar sind. Jeder Wandausschnitt ist von zwei voneinander beabstandeten Seitenrandkanten begrenzt, die von der Montageöffnung des Dosenkörpers bis nahe dessen Dosenkörperbodens verlaufen und die den Wandungsausschnitt begrenzenden Seitenrandkanten im Bereich der Montageöffnung größeren Abstand voneinander haben als im dem Dosenkörperboden nahen Bereich. Die Schneidkontur des jeweiligen Wandteils ist derart geformt, dass die Randkante des Wandungsausschnitts, welche am Bodenbereich des Dosenkörpers verläuft, einen Verlauf mit einer bauchigen Ausnehmung aufweist. Durch diesen bauchigen Verlauf (Rundung) wird der Wandungsausschnitt an die Kabeleinführungen und den Dosenkörperboden herangeführt und weist so eine maximal grosse Fläche auf.

In einer weiteren Ausführungsform ist der nach außen vorspringende Stützflansch derart ausgebildet und weist eine derart grosse Stützflanschfläche auf, dass ein Abstützen des Dosenkörpers am Rand des Dosenlochs mittels des Stützflanschs möglich ist, die Dosenkörperwand einen maximal möglichen Radius aufweist und sich die Stützflanschfläche und der Radius der Dosenkörperwand entgegengesetzt verhalten.

In einer weiteren Ausführungsform ist die Hohlwanddose derart gestaltet, dass eine in die Hohlwanddose eingebrachte Elektroinstallation nicht durch Bohrungen/Löcher im Stützflansch direkt mit der Hohlwand verschraubt wird, sondern die Elektroinstallation stattdessen, durch extra dafür vorgesehene Löcher/Bohrungen in der Dosenwand, in der Hohlwanddose befestigt/fixiert/angebracht/verschraubt wird (die Elektroinstallation ist so nur mit der Hohlwanddose verbunden). Die Hohlwanddose selbst wird durch die vorhandenen Befestigungsmittel/ ausschwenkbaren Haltelaschen an der Wand befestigt/verklemmt, wodurch die Hohlwanddose und die Elektroinstallation im Dosenloch der Hohlwand gehalten werden, ohne das eine Verbindung zwischen Elektroinstallation und Hohlwand besteht.

In einer weiteren Ausführungsform weist die Dosenwand mehr als vier Löcher/Bohrungen zur Befestigung der Elektroinstallation in der Hohlwanddose, insbesondere mehr als vier kreuzweise diagonal angeordnete Löcher/Bohrungen, auf. Die Hohlwanddose weist stattdessen an mindestens vier Positionen/Stellen der Dosenwand jeweils mindestens drei Löcher/Bohrungen (also insgesamt mindestens 12) auf, wobei die jeweils mindestens drei Löcher/Bohrungen (pro Position/Stelle) mindestens 1 mm voneinander entfernt angeordnet sind. Die Montage einer um einen Winkel von mindestens einem Grad gedrehten (schräge/verdrehte Montage) Hohlwanddose ist insbesondere dadurch gut möglich, dass die Elektroinstallation weder direkt an der Hohlwand angebracht wird noch mit lediglich vier kreuzweise diagonal angeordneten Löchern/Bohrungen in der Dosenwand verschraubt wird (Elektroinstallation kann so lediglich in genau einer vorgegebenen Ausrichtung montiert werden, die durch die Einbauausrichtung der Hohlwanddose in der Wand vorgegeben ist). Wird die Hohlwanddose um einen Winkel von mindestens einem Grad gedreht montiert, stehen für die Montage der Elektroinstallation mehrere mindestens 1 mm voneinander entfernt angeordnete Bohrungen bereit. Auf diese Weise kann die Elektroinstallation unabhängig von der Einbausituation der Hohlwanddose ausgerichtet werden.

### KURZBESCHREIBUNG DER ZEICHNUNGEN

Die Erfindung wird im Folgenden rein beispielhaft anhand von in den Zeichnungen schematisch dargestellten Ausführungsbeispielen näher erläutert. Identische Elemente sind in den Figuren mit den gleichen Bezugsziffern gekennzeichnet. Die beschriebenen Ausführungsformen sind im Allgemeinen nicht maßstabsgetreu dargestellt und sind auch nicht als Einschränkung der Erfindung zu verstehen.
Figur 1 zeigt eine Schrägansicht der erfindungsgemäßen Hohlwanddose mit Blick auf das Innere des Dosenkörpers.
Figur 2 zeigt eine Schrägansicht der erfindungsgemäßen Hohlwanddose mit Blick auf das Äussere des Dosenkörpers.
Figur 3 zeigt ein in den Dosenkörper eingeführtes Kabelschutzrohr.
Figur 4 zeigt einen beispielhaften Fixiervorgang eines Kabelschutzrohrs mittels eines Kippelements gemäss der Erfindung.
Figur 5 zeigt eine Frontalansicht der erfindungsgemäßen Hohlwanddose mit Blick auf das Innere des Dosenkörpers.
Figur 6 zeigt eine Frontalansicht der erfindungsgemäßen Hohlwanddose mit Blick auf das Äussere des Dosenkörpers.
Figur 7 zeigt eine Seitenansicht der erfindungsgemäßen Hohlwanddose mit Blick auf das Äussere des Dosenkörpers.
Figur 8 zeigt eine Frontalansicht einer Abdeckung der Kabeleinführung.
Figur 9 zeigt eine Seitenansicht von zwei zusammengesteckten Dosenkörpern mit Blick auf das Äussere der Dosenkörper.

### DETAILIERTE BESCHREIBUNG DER ZEICHNUNGEN

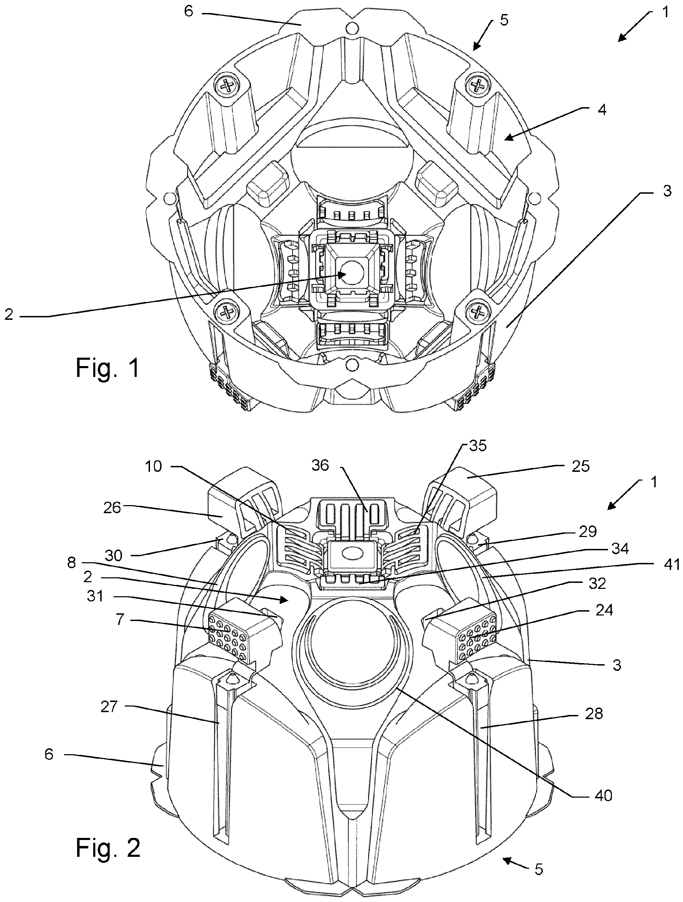

**Figur 1** zeigt eine Schrägansicht der erfindungsgemäßen Hohlwanddose 1 mit Blick auf das Innere des Dosenkörpers 5, welcher durch den Bodenbereich 2, die umlaufende Wand 3 und dem Bodenbereich 2 gegenüberliegende Montageöffnung 4 gebildet wird. Die Hohlwanddose 1 weist einen in radialer Richtung nach außen vorspringenden Stützflansch 6 auf, welcher an vier Stellen, insbesondere an diametral gegenüberliegenden Stellen, über die Dosenwand 3 herausragt. Auf diese Weise ist es möglich, die Fläche des Stützflanschs 6 zu Minimieren und dennoch eine ausreichende Stützwirkung am Rand des Dosenlochs zu erreichen. In den Bereichen der Hohlwanddose 1, in denen der Stützflansch 6 nicht über die Dosenwand 3 herausragt, kann die Dosenwand 3 derart ausgeweitet werden, dass sich der gewünschte Durchmesser der Montageöffnung 4 von 83 mm entsprechend der Norm EN60670 ergibt, wodurch das Volumen des Dosenkörperinneren vergrössert ist.

**Figur 2** zeigt eine Schrägansicht der erfindungsgemäßen Hohlwanddose 1 mit Blick auf das Äussere des Dosenkörpers 5. Die vier Mittel 7, 24, 25, 26 zum Befestigen der Hohlwanddose 1 in einem Dosenloch sind an diametral gegenüberliegenden Stellen angeordnet, insbesondere an Stellen an welchen der Stützflansch 6 nicht herausragt. Bei den Befestigungsmitteln 7, 24, 25, 26 handelt es sich um in radialer Richtung ausschwenkbare Haltelaschen/Klemmkörper, welche jeweils auf einem Gewindeschaft einer Stellschraube sitzen. Die jeweilige Stellschraube ist in einem in die Dosenkörperwand 3 integrierten, durch einen Schraubenkanalmantel eingefassten Schraubenkanal 27, 28, 29, 30 geführt. Zum Einschieben der Hohlwanddose 1 in ein Dosenloch befindet sich jede Haltelasche 7, 24, 25, 26 in einer Aufnahmeaussparung 31, 32, (33, 66 nicht abgebildet), welche zwischen Dosenwand 3 und Bodenbereich 2 lokalisiert ist.

Durch Spannen (Drehen im Uhrzeigersinn) der Stellschraube wird die Haltelasche 7, 24, 25, 26 aus der Aufnahmeaussparung 31, 32, 33, 66 in eine Zwangsführung bewegt, wobei die Zwangsführung dafür sorgt, dass die Haltelasche 7, 24, 25, 26 in radialer Richtung ausschwenkt und sich parallel zur Dosenwand 3 in Richtung des Schraubenkopfes und dementsprechend auch in Richtung des Stützflanschs 6 bewegt. Zwischen der bewegten Haltelasche 7, 24, 25, 26 und dem Stützflasch 6 kann dann die Aussenwand der Hohlwand eingeklemmt werden und so die Hohlwanddose 1 im Dosenloch fixiert werden. Optional können auch nur zwei (in diesem Fall gegenüberliegende Haltelaschen) oder drei der vier Haltelaschen 7, 24, 25, 26 zur Befestigung der Hohlwanddose 1 im Dosenloch angezogen werden. Die optimale Stützwirkung entfaltet sich jedoch durch das Anziehen aller vier Haltelaschen 7, 24, 25, 26. Durch Drehen der jeweiligen Schraube gegen den Uhrzeigersinn bewegt sich die entsprechende Haltelasche 7, 24, 25, 26 in der Zwangsführung wieder in Richtung des Bodenbereichs 2 und kann bei weiterem Drehen wieder in die Aufnahmeaussparung 31, 32, (33, 66 nicht abgebildet) eingeschwenkt werden. Auf diese Weise kann die Hohlwanddose 1 wieder aus dem Dosenloch entfernt werden. Weiterhin sind im Bodenbereich 2 vier Kippelemente 10, 34, 35, 36 angebracht, wobei sich die Kippelemente 10, 34, 35, 36 mittels Scharniere bewegen lassen. Weiterhin weist die Hohlwanddose 1 mindestens eine im Bodenbereich 2 angeordnete Kabeleinführung 8, 40, 41, (42 nicht abgebildet) auf. Die Kabeleinführung 8, 40, 41, (42 nicht abgebildet) hat einen genormten Durchmesser (Norm: EN60670), was in etwa dem Aussendurchmesser eines gängigen Kabelschutzrohrs entspricht.

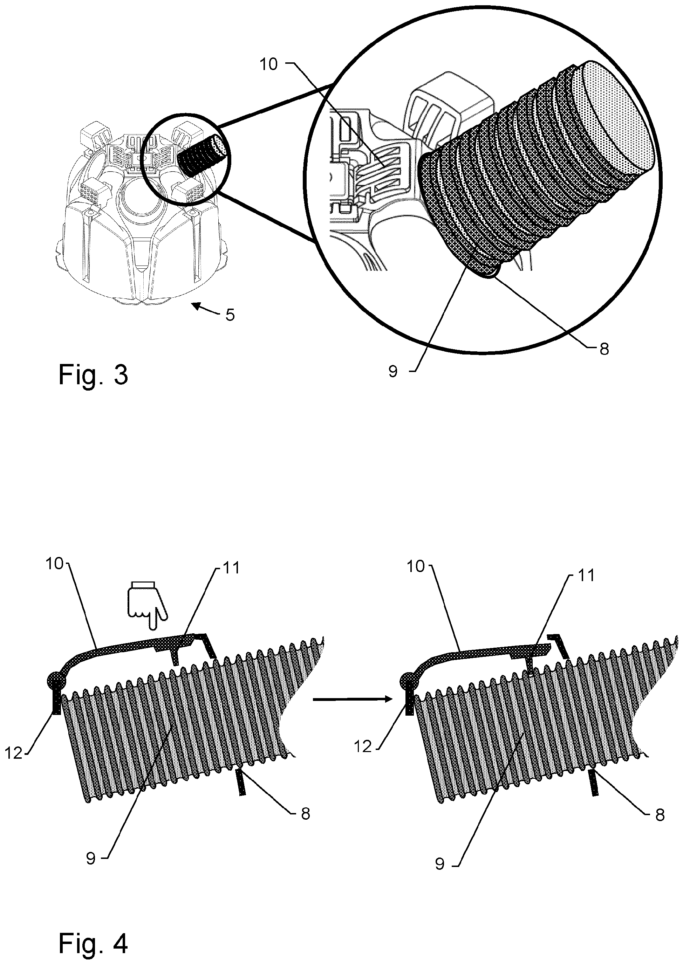

**Figur 3** zeigt ein in den Dosenkörper 5 eingeführtes Kabelschutzrohr 9. Für den Fall, dass der Monteur ein genormtes Kabelschutzrohr 9 mit einem Durchmesser entsprechend dem Durchmesser der Kabeleinführung 8 in den Dosenkörper 5 einführen möchte, kann er die Abdeckung welche am Übergang zum Rand der Kabeleinführung 8 eine Verjüngung aufweist, herausdrücken oder mit einem Messer herausschneiden und so die Kabeleinführung 8 freilegen. Nachdem der Monteur die Abdeckung der Kabeleinführung 8 entfernt hat kann er das Kabelschutzrohr 9 in den Dosenkörper 5 einführen.

**Figur 4** zeigt einen beispielhaften Fixiervorgang eines Kabelschutzrohrs 9 mittels des Kippelements 10 gemäss der Erfindung. Das Kabelschutzrohr 9 wird durch die Kabeleinführung 8 in das Dosenkörperinnere geschoben und trifft mit seinem Anfang auf die Kunststofferhebung 12. Die Kunststofferhebung 12 ist so im Inneren des Dosenkörperinneren platziert, dass der Einrastsektor 11 bei einer Kippung des Kippelements 10, ohne Nachjustieren des Kabelschutzrohrs 9 in eine Rille einrastbar ist. Der Monteur kann mit dem Finger oder mit einem Werkzeug auf das Kippelement 10 drücken und dieses in das Innere des Dosenkörpers 5 bewegen, wobei meine solche Kippbewegung über ein Scharnier ermöglicht wird. Ein auf diese Weise bewegtes Kippelement 10 rastet in eine Rille des Kabelschutzrohrs 9 ein und fixiert dieses in seiner Position, wodurch es weder weiter in den Dosenkörper 5 reinrutschen noch aus dem Dosenkörper 5 herausrutschen kann. Auf diese Weise ist ein vereinfachter Einbau der Hohlwanddose 1 in ein Dosenloch möglich, da bereits eingeführte Kabelschutzrohre 9 oder Kabel während der Montage nicht wieder verrutschen oder gar herausrutschen können.

Möchte der Monteur die Position eines mittels des Einrastsektors 11 fixierten Kabelschutzrohrs 9 ändern oder das fixierte Kabelschutzrohr 9 wieder entfernen, so kann er das Kippelement 10 manuell durch Drücken wieder in seine Ausgangsposition bewegen und somit auch den Einrastsektor 11 wieder aus der Rille entfernen.

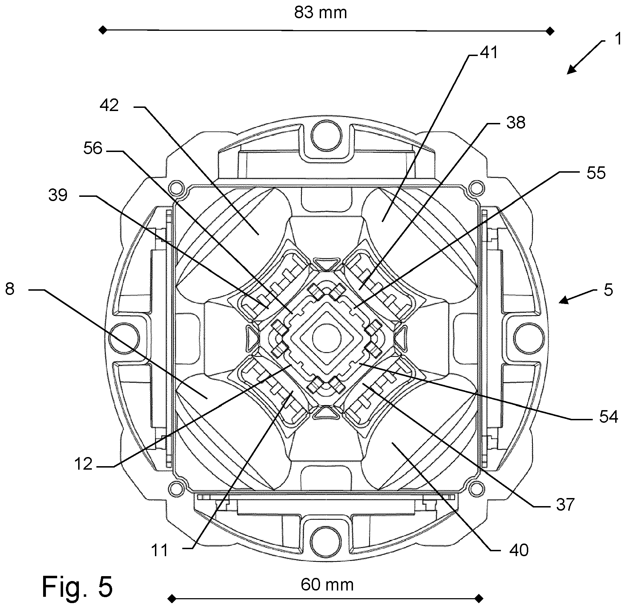

**Figur 5** zeigt eine Frontalansicht der erfindungsgemäßen Hohlwanddose 1 mit Blick auf das Innere des Dosenkörpers 5. Die beispielhaft dargestellte Hohlwanddose 1 weist vier am Bodenbereich 2 angeordnete Kunststofferhebungen 12, 54, 55, 56 auf. Die Kunststofferhebungen 12, 54, 55, 56 sind so an den Kabeleinführungen 8, 40, 41, 42 angeordnet, dass der Anfang des Kabelschutzrohrs 9 bis zu der jeweiligen Kunststofferhebung 12, 54, 55, 56 einführbar ist.

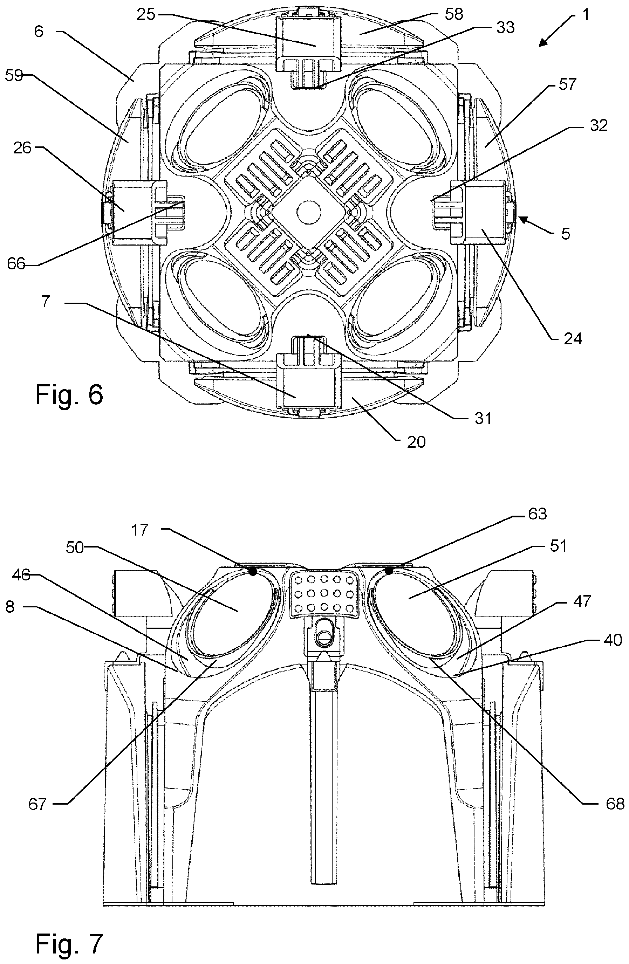

**Figur 6** zeigt eine Frontalansicht der erfindungsgemäßen Hohlwanddose 1 mit Blick auf das Äussere des Dosenkörpers 5. Hierbei sind die an diametral gegenüberliegenden Bereichen, ausbrechbare oder austrennbare Wandteile 20, 57, 58, 59 der Dosenkörperwand 3 verdeutlicht. Diese können herausgebrochen werden oder mit einem Messer herausgeschnitten werden, wobei sich so zur Montageöffnung 4 des Dosenkörpers 5 offene Wandausschnitte bilden. Die Haltelaschen 7, 24, 25, 26 befinden sich in der jeweiligen Aufnahmeaussparung 31, 32, 33, 66, wodurch sie hinter dem Stützflansch 6 verborgen bleiben. Die Wandteile 20, 57, 58, 59 weisen eine radiale Form entsprechend der Dosenwand 3 auf. Auf diese Weise ist der Durchmesser der Montageöffnung 4 zwischen zwei diametral angeordneten Wandteilen 20, 57, 58, 59 in etwa gleich dem Durchmesser der Dosenwand 3 zwischen zwei Stellen ohne herausnehmbares Wandteil 20, 57, 58, 59. Auf diese Weise kann der gewünschte Durchmesser der Montageöffnung 4 von 83 mm an möglichst vielen Bereichen der Hohlwanddose 1, trotz Vorhandensein der Wandteile 20, 57, 58, 59, erreicht werden. Bei gerade geformten Waldteilen wäre der Durchmesser an diesen Stellen deutlich geringer, da die Wandteile nicht an die Form der Dosenwand angepasst sind.

**Figur 7** zeigt eine Seitenansicht der erfindungsgemäßen Hohlwanddose 1 mit Blick auf das Äussere des Dosenkörpers 5. Die jeweilige Abdeckung der Kabeleinführungen 8, 40, (41, 42 nicht abgebildet) besteht aus zwei Elementen, wobei das zweite Element 46, 47, (48, 49 nicht abgebildet) eine Fläche entsprechend der Abdeckung aufweist. Das zweite Element 46, 47, (48, 49 nicht abgebildet) weist zudem eine Aussparung auf, dessen Fläche grösser ist als die Fläche des ersten Elements 50, 51, (52, 53 nicht abgebildet) und in der das erste Element 50, 51, (52, 53 nicht abgebildet) angeordnet ist. Die Aussparung ist derart angeordnet, dass der Umfang des zweiten Elements 46, 47, (48, 49 nicht abgebildet) und der Umfang der Aussparung von einem Punkt 17, 63, (64, 65 nicht abgebildet) ausgehen, wobei dieser Punkt 17, 63, (64, 65 nicht abgebildet) auf dem Umfang des zweiten Elements 46, 47, (48, 49 nicht abgebildet) liegt. Bei einer konzentrischen Anordnung des ersten und des zweiten Elements nach dem Stand der Technik weisen beide Elemente den gleichen Mittelpunkt auf. Weiterhin ist beispielhaft die mindestens eine Führungskante 67, 68 (69, 70 nicht abgebildet) gezeigt, welche in dieser Ausführungsform an der Aussparung des zweiten Elements 46, 47, (48, 49 nicht abgebildet) angeordnet ist. Es ist auch möglich, dass die mindestens eine Führungskante 67, 68 (69, 70 nicht abgebildet) an der mindestens einen Kabeleinführung 8, 40, (41, 42 nicht abgebildet) angeordnet ist oder sowohl an der mindestens einen Kabeleinführung 8, 40, (41, 42 nicht abgebildet) als auch an der Aussparung des zweiten Elements 46, 47, (48, 49 nicht abgebildet) angeordnet ist.

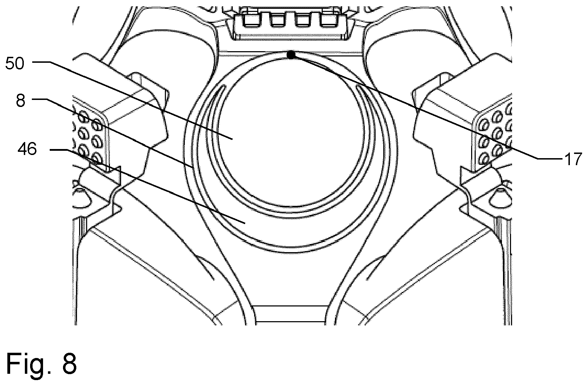

**Figur 8** zeigt eine Frontalansicht einer Abdeckung der Kabeleinführung 8, um die Beschreibung von Figur 7 weiter zu verdeutlichen. Durch die gewählte nicht-konzentrische Anordnung des ersten 50 und des zweiten Elements 46, ist der daraus resultierende Ausgangspunkt 17 derart lokalisiert, dass der Einrastsektor 11 bei einer Kippung des Kippelements 10 an dem Ausgangspunkt 17 in eine Rille des durch die mindestens eine Kabeleinführung 8 in den Dosenkörper 5 eingeführten Kabelschutzrohrs 9 einrastet, ohne das ein Nachjustieren des Kabelschutzrohrs 9 nötig ist. Hierbei ist es unerheblich, ob ein dünneres Kabelschutzrohr in den Dosenkörper 5 eingeführt wird (nur das erste Element 50 wird entfernt) oder ob ein dickeres Kabelschutzrohr in den Dosenkörper 5 eingeführt wird (beide Elemente 46 und 50 werden entfernt). Das Kabelschutzrohr verläuft in beiden Fällen am Punkt 17 vorbei und ermöglicht so das bereits beschriebene Einrasten des Einrastsektors 11.

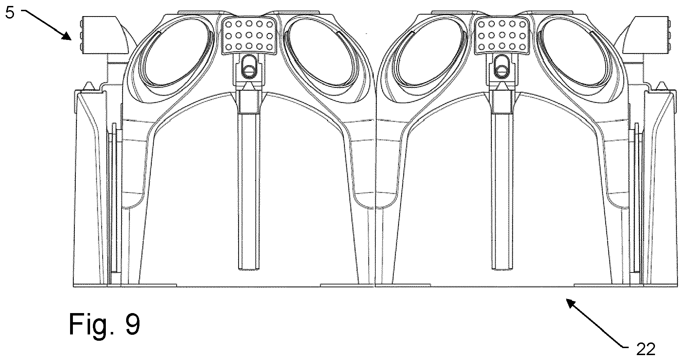

**Figur 9** zeigt eine Seitenansicht von zwei zusammengesteckten Dosenkörpern 5, 22 mit Blick auf das Äussere der Dosenkörper 5, 22. Hierbei wurde sowohl beim Dosenkörper 5 als auch beim Dosenkörper 22 jeweils eines der Wandteile abgetrennt, wodurch sich Wandausschnitte bildeten, welche von zwei voneinander beabstandeten Seitenrandkanten begrenzt sind, die jeweils von der Montageöffnung des Dosenkörpers 5, 22 bis nahe dessen Dosenkörperbodens verlaufen, wobei die den jeweiligen Wandungsausschnitt begrenzenden Seitenrandkanten im Bereich der Montageöffnung einen größeren Abstand voneinander haben als im dem Dosenkörperboden nahen Bereich. Die Randkante des jeweiligen Wandungsausschnitts, welche am Bodenbereich 2 des Dosenkörpers 5 verläuft, weist einen Verlauf mit einer bauchigen Ausnehmung auf. Durch den bauchigen Verlauf ist die Fläche des Wandungsausschnitts maximiert, da so sein Abstand zu den Kabeleinführungen und dem Dosenkörperboden minimiert ist (Wandungsausschnitt ist durch die Rundung an die Kabeleinführungen und den Dosenkörperboden herangeführt). Die Ränder der Wandausschnitte sind komplementär zueinander, beispielsweise in Form einer Matrize und einer Patrize ausgebildet, so dass benachbarte Dosenkörper durch ineinandergreifende Patrizen und Matrizen miteinander verbindbar sind. Dieses System ist vergleichbar mit einer Steckverbindung.

Obwohl die Erfindung oben teilweise unter Bezugnahme auf einige bevorzugte Ausführungsformen dargestellt ist, können zahlreiche Änderungen und Kombinationen verschiedener Merkmale der Ausführungsformen vorgenommen werden. Alle diese Modifikationen liegen innerhalb des Anwendungsbereichs der beigefügten Ansprüche.

## Patentansprüche

1. Hohlwanddose (1) für gebäudetechnische Installationen, insbesondere elektrische Installationsgeräte, mit
• einem durch einen Bodenbereich (2), eine umlaufende Wand (3) und eine dem Bodenbereich (2) gegenüberliegende Montageöffnung (4) gebildeten Dosenkörper (5),
• einem in radialer Richtung nach außen vorspringenden Stützflansch (6),
• Mitteln (7, 24, 25, 26) zum Befestigen der Hohlwanddose (1) in einem Dosenloch,
• mindestens einer im Bodenbereich (2) angeordneten Kabeleinführung (8, 40, 41, 42), wobei durch die mindestens eine Kabeleinführung (8, 40, 41, 42) ein gerilltes Kabelschutzrohr (9) von aussen in den Dosenkörper (5) einführbar ist,
**dadurch gekennzeichnet, dass**
im Bodenbereich (2) mindestens ein Kippelement (10, 34, 35, 36) angebracht ist, wobei das mindestens eine Kippelement (10, 34, 35, 36) einen Einrastsektor (11, 37, 38, 39), insbesondere in Form mindestens eines Zahns, aufweist, wobei der Einrastsektor (11, 37, 38, 39) derart ausgestaltet ist, dass dieser bei einer durch mechanisches Betätigen ausgelösten Bewegung des mindestens einen Kippelements (10, 34, 35, 36), in eine Rille des durch die mindestens eine Kabeleinführung (8, 40, 41, 42) in den Dosenkörper (5) eingeführten Kabelschutzrohrs (9) einrastbar ist und so das Kabelschutzrohr (9) im Dosenkörper (5) hinsichtlich einer Translationsbewegung senkrecht zur Kabeleinführung (8, 40, 41, 42) fixiert.

2. Hohlwanddose (1) nach Anspruch 1, wobei das mindestens eine Kippelement (10, 34, 35, 36) weiter aufweist:
• ein Scharnier, wobei mittels des Scharniers das mindestens eine Kippelement (10, 34, 35, 36) bewegbar am Bodenbereich angebracht ist, und
• einen Formsektor, wobei der Formsektor derart ausgestaltet ist, dass der Formsektor das Scharnier und den Einrastsektor (11, 37, 38, 39) miteinander verbindet und eine Fläche für ein mechanisches Betätigen des Kippelements (10, 34, 35, 36) bereitstellt.

3. Hohlwanddose (1) nach Anspruch 1, wobei das mindestens eine Kippelement (10, 34, 35, 36) zurück in seine Ausgangsposition bewegbar ist.

4. Hohlwanddose (1) nach Anspruch 1, weiterhin aufweisend mindestens eine am Bodenbereich (2) angeordnete Kunststofferhebung (12, 54, 55, 56), wobei
• die mindestens eine Kunststofferhebung (12, 54, 55, 56) derart am Bodenbereich (2) angeordnet ist, dass der Anfang des Kabelschutzrohrs (9) bis zu der mindestens einen Kunststofferhebung (12, 54, 55, 56) einführbar ist, und
• das bis zu der mindestens einen Kunststofferhebung (12, 54, 55, 56) eingeführte Kabelschutzrohr (9) derart im Inneren des Dosenkörpers (5) vorliegt, dass der Einrastsektor (11, 37, 38, 39) bei einer durch mechanisches Betätigen ausgelösten Bewegung des mindestens einen Kippelements (10, 34, 35, 36), ohne Nachjustieren des Kabelschutzrohrs (9) in eine Rille einrastbar ist.

5. Hohlwanddose (1) nach Anspruch 1, wobei eine Abdeckung der mindestens einen Kabeleinführung (8, 40, 41, 42) aufweist:
• ein erstes Element (50, 51, 52, 53), dessen Fläche kleiner ist als die Fläche der Abdeckung,
• ein zweites Element (46, 47, 48, 49), dessen Fläche der Fläche der Abdeckung entspricht, wobei das zweite Element (46, 47, 48, 49) eine Aussparung aufweist, dessen Fläche grösser ist als die Fläche des ersten Elements (50, 51, 52, 53) und das erste Element (50, 51, 52, 53) in der Aussparung anordenbar ist,
wobei die Aussparung derart anordenbar ist, dass der Umfang des zweiten Elements (46, 47, 48, 49) und der Umfang der Aussparung von einem Punkt (17, 63, 64, 65) ausgehen, wobei dieser Punkt (17, 63, 64, 65) auf dem Umfang des zweiten Elements (46, 47, 48, 49) liegt.

6. Hohlwanddose (1) nach den Ansprüchen 1 und 5, wobei das mindestens eine Kippelement (10, 34, 35, 36), derart bewegbar ist, dass der Einrastsektor (11, 37, 38, 39) an dem Ausgangspunkt (17, 63, 64, 65) in eine Rille des durch die mindestens eine Kabeleinführung (8, 40, 41, 42) in den Dosenkörper (5) eingeführten Kabelschutzrohrs (9) einrastbar ist.

7. Hohlwanddose (1) nach einem der vorhergehenden Ansprüche, weiterhin aufweisend mindestens zwei an der Aussenseite der Dosenkörperwand (3) diametral angeordnete Mittel (7, 24, 25, 26) zum Befestigen der Hohlwanddose (1) in einem Dosenloch, wobei die mindestens zwei diametral angeordnete Mittel (7, 24, 25, 26) durch je eine Schraube verstellbare sowie ausschwenkbare Haltelaschen aufweisen, die in eingeschwenkter Lage in radialer Richtung hinter dem nach außen vorspringenden Stützflansch (6) verborgen bleiben und in ausgeschwenkter Lage in radialer Richtung über den nach außen vorspringenden Stützflansch (6) hinausragen.

8. Hohlwanddose (1) nach einem der vorhergehenden Ansprüche, wobei die Dosenkörperwand (3), insbesondere an diametral gegenüberliegenden Bereichen, ausbrechbare oder austrennbare Wandteile (20, 57, 58, 59) aufweist, so dass zur Montageöffnung (4) des Dosenkörpers (5) offene Wandausschnitte gebildet sind, wobei
• die Ränder der Wandausschnitte komplementär zueinander, beispielsweise in Form einer Matrize und einer Patrize ausgebildet sind, so dass benachbarte Dosenkörper (22) durch ineinandergreifende Patrizen und Matrizen miteinander verbindbar sind, und
• jeder Wandausschnitt von zwei voneinander beabstandeten Seitenrandkanten begrenzt ist, die von der Montageöffnung (4) des Dosenkörpers (5) bis nahe dessen Dosenkörperbodens (2) verlaufen und die den Wandungsausschnitt begrenzenden Seitenrandkanten im Bereich der Montageöffnung (4) größeren Abstand voneinander haben als im dem Dosenkörperboden (2) nahen Bereich.

9. Hohlwanddose (1) nach einem der vorhergehenden Ansprüche, wobei
• der nach außen vorspringende Stützflansch (6) derart ausgebildet ist und eine derart grosse Stützflanschfläche aufweist, dass ein Abstützen des Dosenkörpers (5) am Rand des Dosenlochs mittels des Stützflanschs (6) möglich ist,
• die Dosenkörperwand (3) einen maximal möglichen Radius aufweist,
• sich die Stützflanschfläche und der Radius der Dosenkörperwand (3) entgegengesetzt verhalten.

10. Hohlwanddose (1) nach Anspruch 2, wobei das Scharnier derart ausgestaltet ist, dass das mindestens eine Kippelement (10, 34, 35, 36) stufenweise bewegbar ist, wobei das bewegte mindestens eine Kippelement (10, 34, 35, 36) an verschiedenen Stellen des Bewegungsradius des mindestens einen bewegten Kippelements (10, 34, 35, 36) auf einen Zwischen-Widerstand im Scharnier trifft und dadurch zwischen-einrastbar ist.

11. Hohlwanddose (1) nach einem der vorhergehenden Ansprüche, weiterhin aufweisend mindestens eine einen Führungsrohrabschnitt bildende Führungskante (67, 68, 69, 70), wobei die mindestens eine Führungskante (67, 68, 69, 70)
• an der mindestens einen Kabeleinführung (8, 40, 41, 42) angeordnet ist, und/oder
• an der Aussparung des zweiten Elements (46, 47, 48, 49) angeordnet ist,
insbesondere wobei sich die mindestens eine Führungskante (67, 68, 69, 70) an der Dosenkörperwand (3) mindestens 1 mm, insbesondere 5 mm bis 10 mm, nach aussen, und/oder mindestens 1 mm, insbesondere 5 mm bis 10 mm, in das Dosenkörperinnere erhebt,
insbesondere wobei das Kabelschutzrohr (9) bei einem Einführvorgang durch die mindestens eine einen Führungsrohrabschnitt bildende Führungskante (67, 68, 69, 70) richtungsgeführt - indifferent einer tatsächlichen Einschubrichtung - auf die einen End-Anschlag bildende Kunststofferhebung (12, 54, 55, 56) gelenkt wird.

12. Hohlwanddose (1) nach Anspruch 8, wobei die Wandteile (20, 57, 58, 59) jeweils eine definierte Schneidkontur aufweisen, insbesondere wobei die definierten Schneidkonturen derart positioniert sind, dass der Abstand von zwei diametral gegenüberliegenden Wandausschnitten 60 mm beträgt.

13. Hohlwanddose (1) nach einem der vorhergehenden Ansprüche, wobei eine in die Hohlwanddose (1) eingebrachte Elektroinstallation durch Bohrungen in der Dosenwand (3) in der Hohlwanddose (1) befestigbar ist.

14. Hohlwanddose (1) nach Anspruch 13, wobei die Dosenwand (3) mehr als vier Bohrungen zur Befestigung der Elektroinstallation in der Hohlwanddose (1) aufweist, insbesondere wobei die Hohlwanddose (1) an mindestens vier Positionen der Dosenwand (3) jeweils mindestens drei Bohrungen aufweist und die jeweils mindestens drei Bohrungen mindestens 1 mm voneinander entfernt angeordnet sind.
